# EUROPÄISCHE PATENTSCHRIFT

(11) **EP 1 084 747 B1**
(45) Veröffentlichungstag und Bekanntmachung des Hinweises auf die Patenterteilung: **02.02.2005**
(21) Anmeldenummer: 00116572.9
(22) Anmeldetag: 01.08.2000
(51) Int. Cl.: B01J 19/24, B01J 12/00, B01J 15/00, B01J 35/04, B01J 37/06, B01J 37/00, C01B 3/32, C01B 3/16, C01B 3/58

(54) **Vorrichtung zur Durchführung einer heterogen katalysierten Reaktion und Verfahren zu deren Herstellung**
Apparatus for a heterogeneously catalysed reaction and process for its manufacturing
Dispositif pour réaliser une réaction catalytique hétérogène et procédé pour sa fabrication

(30) Priorität: 15.09.1999 DE 19944185
(43) Veröffentlichungstag der Anmeldung: 21.03.2001
(73) Patentinhaber: Ballard Power Systems AG, 73230 Kirchheim / Teck-Nabern (DE)
(72) Erfinder: Lamla, Oskar, 73266 Bissingen a. d. Teck (DE); Schüssler, Martin, Dr., 89073 Ulm (DE)
(74) Vertreter: Beyer, Andreas, Dr.

(56) Entgegenhaltungen:
- EP-A- 0 906 890
- DE-A- 19 708 472
- DE-A- 19 753 720
- DE-A- 19 825 102
- US-A- 5 829 517

## Beschreibung

Die vorliegende Erfindung betrifft eine Vorrichtung zur Durchführung einer heterogen katalysierten Reaktion unter Zuführung eines geeigneten Reaktionsgemisches auf einen Katalysator sowie ein Verfahren zu deren Herstellung.

einer heterogen katalysierten Reaktion handelt es sich beispielsweise um die Wasserstofferzeugung aus Kohlenwasserstoff oder Alkohol, insbesondere Methanol (Methanol-Reformierung), unter Zuführung eines Kohlenwasserstoffes oder Alkohol und Wasser umfassenden Reaktionsgemisches auf einen Katalysator. Weitere Beispiele sind die Kohlenmonoxid-Verringerung unter Freisetzung von Kohlendioxid in einer sogenannten Wasserstoff-Shift-Reaktion, die Kohlenmonoxid-Oxidation unter Zuführung eines CO-haltigen Gases und eines O₂-haltigen Gases auf einen Katalysator sowie das Verbrennen eines brennbaren Eduktes unter Zusatz eines O₂-haltigen Gases in einem katalytischen Brenner.

Die Gewinnung von Wasserstoff aus Methanol basiert auf der Gesamtreaktion CH₃OH + H₂O → CO₂ + 3H₂. Zur Durchführung dieser Reaktion wird in der Praxis ein den Kohlenwasserstoff und Wasserdampf umfassendes Reaktionsgemisch unter Zufuhr von Wärme an einem geeigneten Katalysator entlang geleitet, um in einem zwei- oder mehrstufigen Reaktionsablauf den gewünschten Wasserstoff zu erzeugen. Eine derartige Vorrichtung zur zweistufigen Methanol-Reformierung ist aus der EP 0 687 648 A1 bekannt. In der bekannten Vorrichtung wird das Reaktionsgemisch einem ersten Reaktor zugeführt, in dem nur ein Teilumsatz des Methanols angestrebt wird. Nach dem Durchströmen des ersten Reaktors wird das Gasgemisch, in welchem noch Anteile nicht umgesetzter Edukte enthalten sind, einem zweiten Reaktor zugeleitet, der restumsatzoptimiert aufgebaut ist. Die Reaktoren sind dabei als Platten- bzw. Schüttreaktoren ausgeführt, in welchen der Katalysator in Form einer Schüttung oder Beschichtung der Verteilungskanäle vorgesehen ist. Des weiteren sind Katalysatoren in Form von beschichteten Blechen, Netzen und Schäumen bekannt, die von dem Reaktionsgemisch durchströmt werden.

Aus der EP 0 217 532 B1 ist ein Verfahren zur katalytischen Erzeugung von Wasserstoff aus Gemischen von Methanol und Sauerstoff unter Verwendung eines gasdurchlässigen Katalysatorsystems bekannt, bei dem ein Wasserstoff-Generator mit einer oberen Reaktionszone und einer unteren Reaktionszone vorgesehen ist, wobei das Reaktionsgemisch von Methanol und Sauerstoff in die obere Reaktionszone eingespeist wird. Nach dem Durchströmen der oberen Reaktionszone wird das Reaktionsgemisch in die untere Reaktionszone geleitet, in welcher es durch eine spontane Einleitung der Oxidation des Methanols zu einem derartigen Anstieg der Temperatur kommt, daß eine teilweise Oxidation des Methanols in Anwesenheit eines Kupferkatalysators in der oberen Reaktionszone beginnt und Wasserstoff gebildet wird.

Weiterhin ist aus der EP 0 906 890 A1 eine gattungsgemäße Vorrichtung zur Durchführung einer heterogen katalysierten Reaktion unter Zuführung eines geeigneten Reaktionsgemisches auf einen Katalysator bekannt, wobei der Katalysator durch Verpressen eines Katalysatorpulvers in eine einen Formkörper bildende und stark komprimierte Schicht hergestellt ist, wobei das Reaktionsgemisch unter Druckabfall durch die Katalysatorschicht hindurchpreßbar ist. Zur Abdichtung gegen die Umgebung weisen solche Reaktoren üblicherweise ein massives Metallgehäuse auf.

Ausgehend von diesem Stand der Technik liegt der Erfindung die Aufgabe zugrunde, eine hinsichtlich Gewicht und Kosten verbesserte Vorrichtung zu schaffen. Des weiteren ist es Aufgabe der Erfindung, ein Verfahren zur Herstellung einer solchen Vorrichtung zu schaffen.

Die Aufgabe wird durch eine Vorrichtung mit den Merkmalen des Patentanspruchs 1 beziehungsweise durch ein Verfahren mit den Merkmalen der Patentansprüche 6, 7 oder 10 gelöst.

Die Integration einer Abdichtung direkt auf oder in den Randbereich der gepreßten Schichten stellt eine hinsichtlich Gewicht und Kosten verbesserte Lösung dar, da bisher die Randabdichtung üblicherweise mit Hilfe eines massiven metallischen Gehäuses realisiert wurde. Demgegenüber wird der Stapel erfindungsgemäß in Stapelrichtung durch Endplatten und quer zur Stapelrichtung durch die integrierte Randabdichtung abgedichtet.

Zur Erhöhung der Sicherheit kann außerdem eine Folie vorgesehen werden, die den Stapel gasdicht umschließt. Damit kann sicher vermieden werden, daß Brenngase durch kleinste Undichtigkeiten in der Randabdichtung in die Umgebung entweichen können. Zur Entlüftung kann eine oder mehrere mit einem Katalysator versehene Öffnungen vorgesehen werden. Somit werden austretende Brenngase mit dem Sauerstoff der Umgebungsluft vollständig umgesetzt, so daß eine Belastung der Umwelt reduziert werden kann.

In vorteilhafter Ausgestaltung der Erfindung ist das Katalysatormaterial mit einer Trägerstruktur verpreßt, wodurch das Katalysatormaterial mechanisch stabilisiert ist und/oder eine verbesserte Wärmeleitung vorliegt. Bei der Trägerstruktur handelt es sich vorteilhafterweise um eine dreidimensionale netzartige Struktur (Matrix), die in weiterer vorteilhafter Ausgestaltung der Erfindung eine metallene Trägerstruktur ist. Als Metall wird beispielsweise Kupfer, insbesondere dendritisches Kupfer verwendet.

Die Herstellung der Randabdichtung durch eine stärkere Verdichtung des Katalysatormaterials im Randbereich zeichnet sich durch eine extreme Vereinfachung aus. Lediglich die Preßwerkzeuge und -formen müssen entsprechend angepaßt werden. Durch die Beimischung zusätzlicher Materialien im Randbereich kann die Dichtigkeit verbessert werden, da die Materialien speziell hinsichtlich der Dichtfunktion ausgewählt werden können. Ein anschließender Sinterschritt kann zwar einen erhöhten Aufwand bei der Herstellung bedeuten. Dieses Herstellverfahren wird jedoch bevorzugt in den Fällen eingesetzt, in denen auch das Katalysatormaterial einem Sinterschritt unterzogen wird, so daß kein zusätzlicher Aufwand notwendig ist.

Die Auswahl eines Materials, welches unter Prozeßbedingungen eine Randabdichtung ausbildet, ist zwar in bezug auf die Qualitätskontrolle eher nachteilig, da sich die Dichtigkeit erst nach Inbetriebnahme einstellt. Auf der anderen Seite kann jedoch dadurch bei der Herstellung auf einen zusätzlichen Schritt verzichtet werden.

Für das Auftragen eines gasundurchlässigen, temperaturstabilen Materials auf den fertigen Stapel von Schichten stehen eine Vielzahl von bewährten Verfahren zur Verfügung. Die Verwendung einer Lötfolie zur Randabdichtung zeigt hinsichtlich der Dichtigkeit sehr gute Resultate.

Die Erfindung ist anhand von Ausführungsbeispielen in der Zeichnung schematisch dargestellt und wird im folgenden unter Bezugnahme auf die Zeichnung ausführlich beschrieben.
- Figur 1: veranschaulicht in stark schematischer Darstellung die Funktionsweise einer erfindungsgemäßen Katalysatorschicht.
- Figur 2: zeigt in perspektivischer Darstellung eine erfindungsgemäße stapelförmige Anordnung parallel geschalteter Katalysatorschichten.
- Figur 3: zeigt in perspektivischer Darstellung ein weiteres Ausführungsbeispiel einer einzelnen erfindungsgemäßen Katalysatorschicht.
- Figur 4: zeigt in stark schematischer Darstellung ein weiteres Ausführungsbeispiel einer erfindungsgemäßen stapelförmigen Anordnung parallel geschalteter Katalysatorschichten im Schnitt.

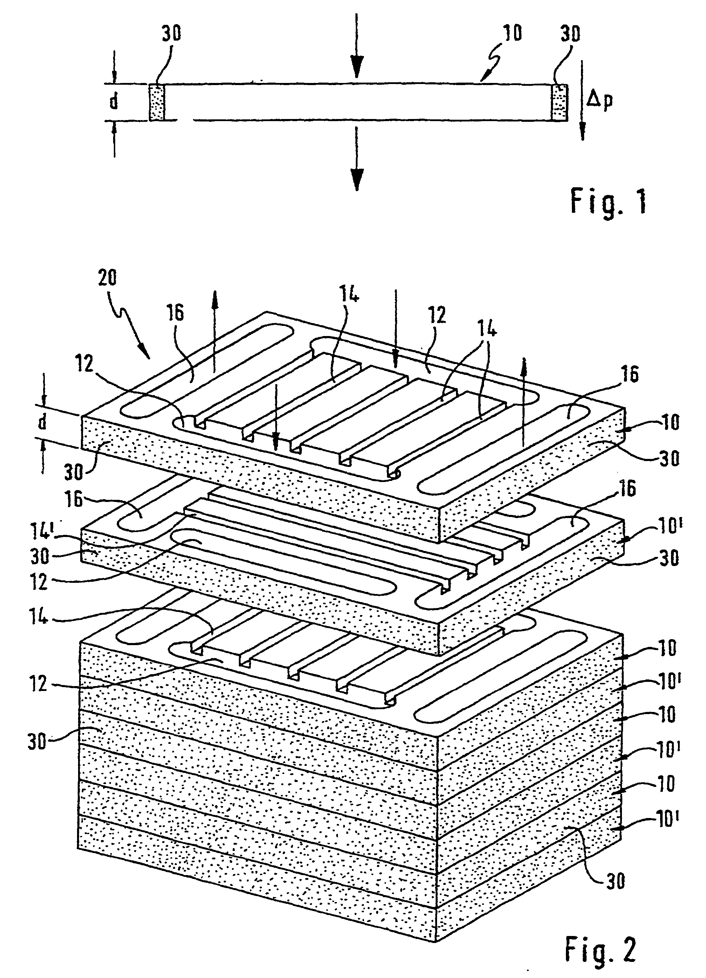

Figur 1 zeigt schematisch in seitlicher Ansicht eine erfindungsgemäße Katalysatorschicht 10, die durch Verpressen von Katalysatormaterial in eine dünne und großflächige, stark komprimierte Schicht gebildet ist. Die Schicht 10 bildet einen Formkörper mit einer Dicke d, die beispielsweise 1 mm beträgt. Als Katalysatormaterial wird ein feinkörniges Katalysatorpulver oder -granulat verwendet, dessen Körner einen Durchmesser von ca. 0,5 mm oder kleiner haben. Das Verpressen erfolgt beispielsweise bei Temperaturen von ca. 200° bis 500°C.

Die dargestellte Katalysatorschicht 10 ist Bestandteil einer nicht näher dargestellten Vorrichtung zur Wasserstofferzeugung, wobei die Edukte des Reaktionsgemisches unter Druckbeaufschlagang im wesentlichen senkrecht zu der Katalysatorschicht 10 auf diese zugeführt und durch sie hindurchgepreßt werden. Beim Durchströmen der Katalysatorschicht 10 erfährt das Reaktionsgemisch einen Druckabfall Δp von ca. 100 mbar und mehr (beispielsweise 1 bis 4 bar). Auf der gegenüberliegenden Seite der Katalysatorschicht 10 treten die katalytischen Reaktionsprodukte im Sinne des eingezeichneten Pfeiles aus.

In den Randbereichen der Katalysatorschicht 10 ist ein im wesentlichen gasdichter Bereich vorgesehen. Dieser gasdichte Bereich stellt eine Randabdichtung 30 dar durch die gewährleistet wird, daß das Gas die Katalysatorschicht 10 lediglich in Pfeilrichtung durchströmt und nicht auch seitlich aus der Katalysatorschicht 10 austritt. Durch die Ausbildung einer Randabdichtung 30 direkt in oder auf der Katalysatorschicht 10 ist es möglich, auf ein separates massives Metallgehäuse zu verzichten. Die Herstellung einer solchen Randabdichtung 30 wird weiter unten ausführlich beschrieben.

Um dem Katalysatormaterial eine bessere mechanische Stabilität und/oder verbesserte Wärmeleitung zu verleihen, wird das Katalysatormaterial in eine Trägerstruktur verpreßt. Bei dieser Trägerstruktur handelt es sich um eine netzartige Matrix, die durch Vermischen des mindestens einen Katalysatorpulvers mit dendritischem Kupfer in Pulverform und Verpressen dieses Gemisches erhalten wird. Beim Verpressen bildet das dendritische Kupfer eine netzartige Matrixstruktur, in welche die Katalysatorkörner "eingebaut" sind. Das dendritische Kupferpulver läßt sich auch bei einem relativ geringen Massenanteil des Kupferpulvers zur Gesamtmasse der Schicht leicht zu einem Netz zusammenpressen bzw. versintern, hat eine große Oberfläche und ist selber katalytisch aktiv. Durch die Verwendung von dendritischem Kupferpulver wird deshalb ein stabilisierendes, fixierendes und wärmeverteilendes Netz im Mikrometer-Bereich erhalten.

Die Katalysatorschicht 10 weist eine relativ große Fläche von beispielsweise 100 cm² auf. Um eine kompaktere Bauweise zu erreichen, wird das von dem Reaktionsgemisch zu durchfließende Katalysatorvolumen auf mehrere Schichten aufgeteilt, die jedoch nicht nebeneinander, sondern hintereinander, aber parallel geschaltet angeordnet sind. Eine derartige Anordnung ist in Figur 2 dargestellt und zeigt einen eine Vielzahl von aufeinanderliegenden Katalysatorschichten 10, 10' umfassenden Stapel 20, wobei die in der Zeichnung oben liegenden Schichten zur besseren Veranschaulichung der Wirkungsweise beabstandet zueinander dargestellt sind.

Jede Katalysatorschicht 10 weist an ihrem senkrecht zur Stapelrichtung verlaufenden Außenumfang eine Randabdichtung 30 auf. Die Katalysatorschichten 10 weisen außerdem Kanäle 12, 14, 14' 16 zum Leiten von Edukten und Produkten der katalytischen Reaktion auf. In dem in Figur 2 dargestellten Ausführungsbeispiel sind in der Katalysatorschicht im wesentlichen parallel zu den Längskanten verlaufende Eduktkanäle 12 vorgesehen, die senkrecht zur Flächenebene der Katalysatorschicht durchgehende Führungskanäle bilden, wobei die Eduktkanäle 12 übereinanderliegender Katalysatorschichten 10, 10' im wesentlichen deckungsgleich zueinander angeordnet sind und somit einen durch den gesamten Stapel 20 von oben nach unten durchgehenden Führungskanal für die Edukte des Reaktionsgemisches bilden. Je nach Verwendung der Stapelanordnung wird durch die Eduktkanäle 12 ein spezifisches Reaktionsgemisch geleitet. Im Falle der Verwendung als Wasserstoffreaktor umfaßt das Reaktionsgemisch Alkohol, insbesondere Methanol, sowie chemisch gebundenen Wasserstoff, vorteilhafterweise in Form von Wasser. Im Falle der Verwendung des Stapels 20 in einer sogenannten H₂-Shift-Reaktion zur Verringerung von Kohlenmonoxid unter Freisetzung von Kohlendioxid umfaßt das Reaktionsgemisch Kohlenmonoxid und Wasserstoff. Im Falle des Einsatzes im Bereich der Kohlenmonoxid-Oxidation umfaßt das Reaktionsgemisch ein CO-haltiges Gas sowie ein O₂haltiges Gas. Bei der Verwendung des Stapels 20 in einem katalytischen Brenner umfaßt das Reaktionsgemisch ein brennbares Edukt sowie ein O₂-haltiges Gas.

Die Eduktkanäle 12 jeder zweiten Katalysatorschicht 10 stehen mit im wesentlichen parallel zur Flächenausdehnung der Katalysatorschicht 10 verlaufenden Verteilungskanälen 14 in Verbindung, die wenigstens einen Teil des durch die Eduktkanäle 12 eintretenden Reaktionsgemisches in das Innere der Katalysatorschicht 10 ableiten.

Demnach wird jeweils ein Teil des durch die Eduktkanäle 12 eintretenden und durch den Stapel 20 geführten Reaktionsgemisches in jeder zweiten Schichtenebene durch die Verteilungskanäle 14 in das Innere der beiden angrenzenden Katalysatorschichten 10, 10' abgeleitet, wodurch eine Parallelschaltung der übereinanderliegend angeordneten Katalysatorschichten erreicht wird.

In dem in der Figur 2 dargestellten Ausführungsbeispiel sind wie beschrieben pro Katalysatorschicht 10, 10' zwei räumlich getrennte Eduktkanäle 12 vorgesehen. Dies kann dazu genutzt werden, um verschiedene Stoffe des Reaktionsgemisches getrennt voneinander zuzuführen, so daß einzelne Bestandteile des Reaktionsgemisches erst in der Ebene der Katalysatorschicht 10 zusammenkommen.

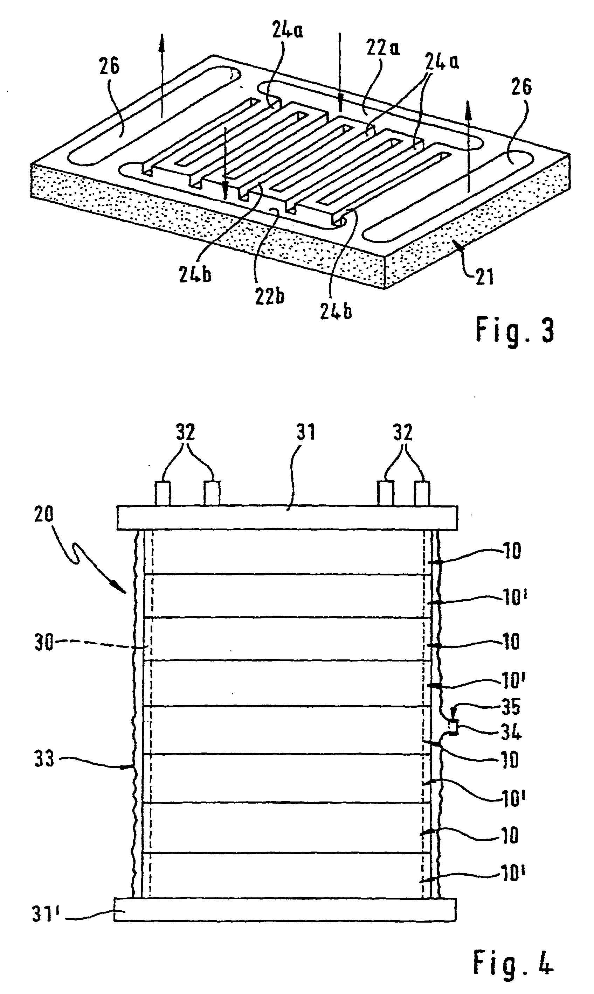

Vorteilhafterweise wird hierzu eine Katalysatorschicht mit einer Kanalstruktur eingesetzt, wie sie in dem Ausführungsbeispiel der Figur 3 dargestellt ist. Die in Figur 3 gezeigte Katalysatorschicht 21 weist Eduktkanäle 22a, 22b und Produktkanäle 26 auf, die in ihrer Funktion prinzipiell den in Zusammenhang mit der Figur 2 beschriebenen Edukt- und Produktkanälen 12 und 16 entsprechen. Abweichend von der in Figur 2 dargestellten Katalysatorschicht 10 stehen die zwei räumlich getrennt voneinander angeordneten Eduktkanäle 22a, 22b durch die Verteilungskanäle nicht miteinander in Verbindung, sondern die von jedem der Eduktkanäle 22a, 22b ausgehenden Verteilungskanäle 24a bzw. 24b erstrecken sich quer über die Katalysatorschicht 21, enden jedoch, bevor sie den gegenüberliegenden Eduktkanal 22b bzw. 22a erreichen. Dadurch wird eine Anordnung von alternierend ineinandergreifenden Kanälen geschaffen, was zur separaten Zuführung eines (weiteren) Gases, das zur Reaktion benötigt wird oder diese unterstützt, genutzt werden kann. Wird im Beispiel des Methanol-Reformers durch den einen Eduktkanal, beispielsweise den Eduktkanal 22a, eine Mischung aus Methanol und Wasserdampf zugeführt, so kann durch den entsprechend anderen Eduktkanal 22b Sauerstoff (Luft) zugeführt werden. Über die dem jeweiligen Eduktkanal zugeordneten Verteilungskanäle 24a, 24b werden die zugeleiteten Stoffe in der Katalysatorschicht 21 verteilt und treten erst in der Schicht selbst miteinander in Kontakt. Dadurch wird eine besonders homogene und sichere (Explosionsgefahr) Verteilung und Vermischung der Edukte erreicht. Selbstverständlich sind auch andere als die dargestellte Ausführungsformen mit nur einem Eduktkanal oder auch mehr als zwei Eduktkanälen möglich.

Entlang der Querkanten der Katalysatorschichten 10, 10' sind analog zu den Eduktkanälen 12 ausgebildete Produktkanäle 16 angeordnet, die ebenfalls im wesentlichen senkrecht zur Flächenausdehnung jeder Katalysatorschicht 10 verlaufende Führungskanäle bilden, die bei übereinandergelegten Katalysatorschichten 10 jeweils deckungsgleich mit den Produktkanälen der darüber bzw. darunterliegenden Katalysatorschicht 10, 10' zum Liegen kommen. Die Produktkanäle 16 jeder zweiten Katalysatorschicht 10' stehen mit Sammelkanälen 14' in Verbindung, die das aus der jeweils darüber- und darunterliegenden Katalysatorschicht 10, 10' austretende Reaktionsprodukt sammeln und in Querrichtung den Produktkanälen 16 zuführen, mittels welcher die Reaktionsprodukte durch den Stapel 20 abgeleitet werden.

In der dargestellten Ausführungsform einer erfindungsgemäßen Vorrichtung zur Durchführung einer heterogen katalysierten Reaktion wie der Wasserstofferzeugung verfügen die übereinandergelegten Katalysatorschichten 10, 10' also über jeweils alternierende Funktionsweisen; in den Katalysatorschichten 10 werden die durch die Eduktkanäle 12 zugeführten Edukte verteilt und über Verteilungskanäle 14 über die Fläche der darüber- und darunterliegenden Katalysatorschicht verteilt, wo sie diese im wesentlichen senkrecht und unter einem beträchtlichen Druckabfall durchströmen. In der jeweils folgenden Katalysatorschicht 10' werden die Produkte der katalytischen Reaktion in Sammelkanälen 14' gesammelt und den Produktkanälen 16 zum Abführen der Reaktionsprodukte aus dem Stapel 20 zugeführt.

Natürlich sind auch Ausführungsformen denkbar, in welchen jede Katalysatorschicht das Zuführen, Verteilen, Sammeln und Abführen der Edukte bzw. Produkte übernimmt. Derartige komplexere Katalysatorschichten können beispielsweise durch Aufpressen und Sintern von pulverförmigen Katalysatormaterial auf bereits gesinterte Katalysatorschichten hergestellt werden.

Somit werden Katalysatorschichten bereitgestellt, die einfach und in kompakter Weise herstellbar und zur Verwendung in Wasserstoffreaktoren zur katalytischen Wasserstofferzeugung, Wasserstoff-Shift-Stufen zur CO-Verringerung, Kohlenmonoxid-Oxidatoren sowie katalytischen Brennern geeignet sind. Durch diese Ausgestaltung des Katalysators wird eine modulare Bauweise ermöglicht, bei dem nur geringe thermische Verluste und keine großen Temperaturgradienten auftreten, wodurch eine über ein großes Volumen homogen ablaufende Reaktion ermöglicht wird. Das gesamte Katalysatorvolumen ist räumlich mit Edukten erreichbar, was zu einer deutlich verbesserten Startdynamik führt. Darüber hinaus wird die Gefahr der Zündung der homogenen Verbrennung von Methanol oder der Knallgasreaktion vermieden.

Durch geeignete Wahl der Prozeßparameter (Preßdruck, Temperatur, Art und Beschaffenheit der Ausgangsmaterialien wie Korngrößenverteilung, Porösität etc.) kann der Fachmann eine auf die jeweiligen Anforderungen zugeschnittene und bezüglich Schichtfolge, Wärmeverteilung, Strömungsverhältnisse und mechanische Eigenschaften wie Druckabfall und Stabilität optimierte erfindungsgemäße Katalysatorschicht bzw. Katalysatorschichtenanordnung erzeugen.

Die Randabdichtung 30 kann auf unterschiedliche Arten hergestellt werden. Sie kann zum einen dadurch ausgebildet werden, daß das Katalysatorpulver bei der Herstellung im Randbereich eine stärkere Verdichtung erfährt und somit eine im wesentlichen gasdichte Randabdichtung 30 ausbildet. Weiterhin können in dem Randbereich dem Katalysatorpulver ein oder mehrere weitere Materialien beigemischt werden, die dann in einer Nachbehandlungsschritt die im wesentlichen gasdichte Randabdichtung 30 ausbilden. Vorzugsweise werden hier Materialien verwendet, die in einem anschließenden Sinterschritt eine dichte Schicht ausbilden. Möglich ist jedoch auch die Verwendung von Materialien, die bereits unter Prozeßbedingungen eine Umwandlung erfahren und daher bei der ersten Inbetriebnahme der Vorrichtung die im wesentlichen gasdichte Randabdichtung 30 ausbilden.

Weiterhin ist es auch möglich, die Randabdichtung 30 nach dem Pressen und Aufeinanderstapeln der Katalysatorschichten 10 auf den Randbereich aufzutragen. Hierfür können alle gasundurchlässigen und temperaturstabilen Materialien verwendet werden. Vorzugsweise wird Kupfer oder ein Keramikmaterial verwendet. Die Randabdichtung 30 kann beispielsweise durch Tauchen oder mittels Plasma- oder Flammspritzen aufgebracht werden. Möglich ist auch das Aufbringen einer Lötfolie auf den fertigen Stapel, wobei die Lötfolie unter Wärmeeinwirkung in den porösen Körper eindringt und diesen dann abdichtet.

Das Aufbringen einer Randabdichtung 30 direkt in oder auf den Randbereich der Katalysatorschichten 10 weist den Vorteil auf, daß auf ein ansonsten üblicherweise verwendetes massives Metallgehäuse verzichtet werden kann. Dadurch können sowohl Kosten als auch das Gewicht der Vorrichtung reduziert werden.

Eine hinsichtlich der Sicherheit optimierte Vorrichtung in geschnittener Darstellung zeigt Fig. 4. Hierbei ist wie in Fig. 2 ein Stapel 20 von Katalysatorschichten 10, 10' vorgesehen. Dieser Stapel ist zwischen zwei Endplatten 31, 31' angeordnet, wobei in einer oder beiden Endplatten 31, 31' Zu- und Abfuhrleitungen 32 für die Medien vorgesehen sind. Im gezeigten Ausführungsbeispiel sind in der oberen Endplatte 31 vier Zu- beziehungsweise Abfuhrleitungen 32 eingezeichnet. Hierbei handelt es sich jedoch nur um eine prinzipielle Darstellung. Selbstverständlich kann auch eine andere Anzahl von Zu- und Abfuhrleitungen 32 vorgesehen werden. Außerdem müssen diese nicht alle in der oberen Endplatte 31 angeordnet werden, sondern es können auch ein Teil oder alle der Zu- und Abfuhrleitungen 32 in der unteren Endplatte 31' vorgesehen werden.

Alle Katalysatorschichten 10, 10' weisen im Randbereich eine zur Vereinfachung nur gestrichelt angedeutete Randabdichtung 30 auf, durch welche der Stapel 20 quer zur Stapelrichtung gegen die Umgebung abgedichtet ist. In Stapelrichtung erfolgt die Abdichtung über die Endplatten 31, 31'. Aus diesem Grund müssen die Katalysatorschichten 10, 10' selbstverständlich auch gasdicht mit den Endplatten 31, 31' verbunden sein. Weiterhin ist der gesamte Stapel 20 von einer gasdichten Folie 33 umgeben, welche ebenfalls gasdicht mit den beiden Endplatten 31, 31' verbunden ist. Die Folie 33 weist zumindest eine mit einem Oxidationskatalysator 34 versehene Öffnung 35 auf. Durch diese Öffnung 35 können Brenngase, die durch eventuell vorhandene kleinste Undichtigkeiten aus den Randabdichtungen 30 austreten, nach einer vollständigen Oxidation mit dem in der Umgebungsluft vorhandenen Sauerstoff an die Umgebung abgegeben werden. Bei einer Anwendung der Vorrichtung in Brennstoffzellensystemen kommen hierbei insbesondere CO, H2, Methanol oder Kohlenwasserstoffe in Frage, die an einem Katalysator zu CO2 und H2O oxidiert werden. Selbstverständlich können auch mehrere Öffnungen 35 vorgesehen werden. Auch ist es möglich, die Öffnung 35 in einer der Endplatten 31, 31' anzuordnen. Neben der Abgabe an die Umwelt ist auch eine Rückführung an eine beliebige Stelle im System möglich. Schließlich kann auch die gesamte Vorrichtung von der Folie 33 umgeben sein, so daß eine Abdichtung der Folie 33 gegen die Endplatten 31, 31' entfallen kann.

## Patentansprüche

1. Vorrichtung zur Durchführung einer heterogen katalysierten Reaktion unter Zuführung eines geeigneten Reaktionsgemisches auf einen Katalysator, der aus mehreren aufeinandergestapelten und durch Verpressen von Katalysatormaterial gebildeten dünnen und großflächigen Schichten (10, 10'; 21) besteht, durch die das Reaktionsgemisch unter Druckabfall (Δp) hindurchpressbar ist, mit Kanälen (12, 14, 14', 16; 22a, 22b, 24a, 24b, 26) zum Leiten von Edukten des Reaktionsgemisches und der Reaktionsprodukte,
**dadurch gekennzeichnet, dass** die aufeinandergestapelten Schichten (10, 10'; 21) in Stapelrichtung jeweils von einer Endplatte (31, 31') begrenzt werden,
dass zumindest in einer der Endplatten (31, 31') Zu- beziehungsweise Abfuhrleitungen (32) vorgesehen sind, die mit den Kanälen (12, 14, 14', 16; 22a, 22b, 24a, 24b, 26) in Strömungsverbindung stehen, und
dass die Schichten (10, 10'; 21) im Randbereich oder auf der quer zur Stapelrichtung verlaufenden Oberfläche eine Randabdichtung (30) aufweisen.

2. Vorrichtung nach Anspruch 1,
**dadurch gekennzeichnet, dass** die aufeinandergestapelten Schichten (10, 10'; 21) von einer gasdichten Folie (33) umgeben sind.

3. Vorrichtung nach Anspruch 2,
**dadurch gekennzeichnet, dass** der Bereich zwischen der Folie (33) und den Schichten (10, 10'; 21) zur Entlüftung zumindest eine mit einem Katalysator (34) versehene Öffnung (35) aufweist.

4. Vorrichtung nach Anspruch 1,
**dadurch gekennzeichnet, dass** das Katalysatormaterial mit einer netzartigen, metallenen Trägerstruktur verpresst ist.

5. Vorrichtung nach Anspruch 4,
**dadurch gekennzeichnet, dass** die netzartige Trägerstruktur aus dendritischem Kupfer ist.

6. Verfahren zur Herstellung einer Randabdichtung für eine Vorrichtung gemäß Anspruch 1,
**dadurch gekennzeichnet, dass** das Katalysatormaterial im Randbereich so stark verdichtet wird, dass eine im Wesentlichen gasdichte Randabdichtung entsteht.

7. Verfahren zur Herstellung einer Randabdichtung für eine Vorrichtung gemäß Anspruch 1,
**dadurch gekennzeichnet, dass** dem Katalysatormaterial vor dem Verpressen im Randbereich zumindest ein weiteres Material beigemischt wird, welches nach dem Pressen in einem Nachbehandlungsschritt eine gasdichte Randabdichtung (30) ausbildet.

8. Verfahren nach Anspruch 7,
**dadurch gekennzeichnet, dass** die Schichten (10, 10'; 21) im Anschluss an das Verpressen einer Sinterung unterzogen werden.

9. Verfahren nach Anspruch 7,
**dadurch gekennzeichnet, dass** ein Material beigemischt wird, welches unter Prozessbedingungen eine gasdichte Randabdichtung (30) ausbildet.

10. Verfahren zur Herstellung einer Randabdichtung für eine Vorrichtung gemäß Anspruch 1,
**dadurch gekennzeichnet, dass** auf die gepressten, aufeinandergestapelten Schichten (10, 10'; 21) ein gasundurchlässiges, temperaturstabiles Material aufgetragen wird.

11. Verfahren nach Anspruch 10,
**dadurch gekennzeichnet, dass** das Material durch Tauchen, Plasmaspritzen oder Flammspritzen aufgebracht wird.

12. Verfahren nach Anspruch 10,
**dadurch gekennzeichnet, dass** eine Lötfolie auf die gepressten, aufeinandergestapelten Schichten (10, 10'; 21) aufgebracht wird und dass die Vorrichtung anschließend einer erhöhten Temperatur ausgesetzt wird, wobei die Lötfolie in die Schichten (10, 10'; 21) eindringt und eine gasdichte Randabdichtung (30) ausbildet.

## Claims

1. Apparatus for carrying out a heterogeneously catalysed reaction, with a suitable reaction mixture being fed to a catalyst, which comprises a plurality of thin and large-area layers (10, 10'; 21), which are stacked on top of one another, are formed by pressing catalyst material and through which the reaction mixture can be forced with a pressure drop (Δp), having passages (12, 14, 14', 16; 22a, 22b, 24a, 24b, 26) for carrying starting materials for the reaction mixture and the reaction products, **characterized in that** the layers (10, 10'; 21) which are stacked on top of one another are in each case delimited in the stack direction by an end plate (31, 31'), **in that** feed and/or discharge lines (32), which are in flow communication with the passages (12, 14, 14', 16; 22a, 22b, 24a, 24b, 26), are provided at least in one of the end plates (31, 31'), and **in that** the layers (10, 10'; 21) have an edge seal (30) in the edge region or on the surface running transversely with respect to the stack direction.

2. Apparatus according to Claim 1, **characterized in that** the layers (10, 10'; 21) which are stacked on top of one another are surrounded by a gas-tight sheet (33).

3. Apparatus according to Claim 2, **characterized in that** the region between the sheet (33) and the layers (10, 10'; 21) has at least one opening (35) provided with a catalyst (34) for ventilation purposes.

4. Apparatus according to Claim 1, **characterized in that** the catalyst material is pressed to a mesh-like, metallic support structure.

5. Apparatus according to Claim 4, **characterized in that** the mesh-like support structure is formed from dendritic copper.

6. Process for producing an edge seal for an apparatus according to Claim 1, **characterized in that** in the edge region the catalyst material is compacted to such an extent that a substantially gas-tight edge seal is formed.

7. Process for producing an edge seal for an apparatus according to Claim 1, **characterized in that** prior to its pressing in the edge region, at least one further material is admixed with the catalyst material, and this further material forms a gas-tight edge seal (30) in an aftertreatment step following the pressing operation.

8. Process according to Claim 7, **characterized in that** the layers (10, 10'; 21) are subjected to a sintering treatment after the pressing operation.

9. Process according to Claim 7, **characterized in that** a material that forms a gas-tight edge seal (30) under process conditions is admixed.

10. Process for producing an edge seal for an apparatus according to Claim 1, **characterized in that** a gas-impermeable, thermally stable material is applied to the pressed layers (10, 10'; 21) which have been stacked on top of one another.

11. Process according to Claim 10, **characterized in that** the material is applied by dip coating, plasma spraying or flame spraying.

12. Process according to Claim 10, **characterized in that** a soldering foil is applied to the pressed layers (10, 10'; 21) which have been stacked on top of one another, and **in that** the apparatus is then exposed to an elevated temperature, with the soldering foil penetrating into the layers (10, 10'; 21) and forming a gas-tight edge seal (30).

## Revendications

1. Dispositif pour réaliser une réaction catalysée de manière hétérogène en amenant un mélange réactionnel approprié sur un catalyseur qui se compose de plusieurs couches minces de grande superficie (10, 10' ; 21), empilées les unes sur les autres et formées par compression de matériau catalyseur, à travers lesquelles le mélange réactionnel peut être forcé à passer avec une chute de pression (Δp), avec des canaux (12, 14, 14', 16 ; 22a, 22b, 24a, 24b, 26) pour conduire des éduits du mélange réactionnel et des produits de la réaction,
**caractérisé en ce que** les couches (10, 10' ; 21) empilées les unes sur les autres sont limitées respectivement par une plaque d'extrémité (31, 31'),
**en ce qu'**il est prévu dans l'une au moins des plaques d'extrémité (31, 31') des conduits d'alimentation ou d'évacuation (32) qui sont en communication fluide avec les canaux (12, 14, 14', 16 ; 22a, 22b, 24a, 24b, 26), et
**en ce que** les couches (10, 10' ; 21) présentent une étanchéité périphérique (30) dans la zone de bord ou sur la surface s'étendant perpendiculairement au sens d'empilage.

2. Dispositif selon la revendication 1, **caractérisé en ce que** les couches (10, 10' ; 21) empilées les unes sur les autres sont entourées par un film étanche aux gaz (33).

3. Dispositif selon la revendication 2, **caractérisé en ce que** la zone entre le film (33) et les couches (10, 10' ; 21) présente au moins une ouverture (35) munie d'un catalyseur (34) pour la désaération.

4. Dispositif selon la revendication 1, **caractérisé en ce que** le matériau catalyseur est comprimé avec une structure porteuse métallique réticulée.

5. Dispositif selon la revendication 4, **caractérisé en ce que** la structure porteuse réticulée est en cuivre dendritique.

6. Procédé de réalisation d'une étanchéité périphérique pour un dispositif selon la revendication 1, **caractérisé en ce que** le matériau catalyseur est fortement densifié dans la zone périphérique de manière à obtenir une étanchéité périphérique pratiquement étanche aux gaz.

7. Procédé de réalisation d'une étanchéité périphérique pour un dispositif selon la revendication 1, **caractérisé en ce que** l'on mélange au matériau catalyseur avant la compression dans la zone périphérique au moins un autre matériau qui après la compression forme dans une étape de traitement ultérieur une étanchéité périphérique étanche aux gaz (30).

8. Procédé selon la revendication 7, **caractérisé en ce que** les couches (10, 10' ; 21) sont soumises à un frittage à la suite de la compression.

9. Procédé selon la revendication 7, **caractérisé en ce que** l'on mélange un matériau qui dans les conditions du procédé forme une étanchéité périphérique étanche aux gaz (30).

10. Procédé de réalisation d'une étanchéité périphérique pour un dispositif selon la revendication 1, **caractérisé en ce que** l'on dépose sur les couches (10, 10' ; 21) empilées les unes sur les autres et comprimées un matériau thermiquement stable imperméable aux gaz.

11. Procédé selon la revendication 10, **caractérisé en ce que** le matériau est déposé par immersion, par projection au plasma ou par projection à la flamme.

12. Procédé selon la revendication 10, **caractérisé en ce qu'**un film de soudure est déposé sur les couches (10, 10' ; 21) empilées les unes sur les autres et comprimées et **en ce que** le dispositif est ensuite exposé à une température élevée, grâce à quoi le film de soudure pénètre dans les couches (10, 10' ; 21) et forme une étanchéité périphérique étanche aux gaz (30).
